# EUROPÄISCHE PATENTSCHRIFT

(11) **EP 1 673 666 B1**
(45) Veröffentlichungstag und Bekanntmachung des Hinweises auf die Patenterteilung: **16.04.2008**
(21) Anmeldenummer: 04790157.4
(22) Anmeldetag: 06.10.2004
(51) Int. Cl.: G05B 17/02

(54) **VERFAHREN ZUR COMPUTERGESTÜTZTEN SIMULATION EINER MASCHINENANORDNUNG, SIMULATIONSEINRICHTUNG, COMPUTERLESBARES SPEICHERMEDIUM UND COMPUTERPROGRAMM-ELEMENT**
METHOD FOR COMPUTER-ASSISTED SIMULATION OF A MACHINE ARRANGEMENT, SIMULATION DEVICE, COMPUTER-READABLE STORAGE MEDIUM AND COMPUTER PROGRAM ELEMENT
PROCEDE DE SIMULATION D'UN ENSEMBLE DE MACHINES ASSISTEE PAR ORDINATEUR, DISPOSITIF DE SIMULATION, SUPPORT D'ENREGISTREMENT LISIBLE PAR UN ORDINATEUR ET ELEMENT DE PROGRAMME INFORMATIQUE

(30) Priorität: 15.10.2003 DE 10348019
(43) Veröffentlichungstag der Anmeldung: 28.06.2006
(73) Patentinhaber: Henkel Kommanditgesellschaft auf Aktien, 40589 Düsseldorf (DE)
(72) Erfinder: POKORNY, Sascha, 42718 Solingen (DE); REIFFERSCHEIDT, Ralf, 47279 Duisburg (DE); MEIER, Joachim, 42799 Leichlingen (DE); HENNIG, Joachim, 01069 Dresden (DE)
(86) Internationale Anmeldenummer: PCT/EP2004/011178
(87) Internationale Veröffentlichungsnummer: WO 2005/038541

(56) Entgegenhaltungen:
- EP-A- 1 315 056
- US-A- 5 826 060
- US-B1- 6 415 188
- M.PFEFFER: "LASERSCANNING VON DER REALEN ZUR DIGITALEN-VON DER DIGITALEN ZUR REALEN FABRIK" INTERAKTIV, März 2002 (2002-03), Seiten 26-27, XP002313155

## Beschreibung

Die Erfindung betrifft ein Verfahren zur computergestützten Simulation einer Maschinen-Anordnung, eine Simulationseinrichtung, ein Computerlesbares Speichermedium sowie ein Computerprogramm-Element.

In [1] ist ein kommerziell erhältliches Simulationsprogramm beschrieben und damit eine Simulationseinrichtung zum computergestützten Simulieren einer Maschinen-Anordnung, im Folgenden auch bezeichnet als Prozesslinie, mit einer Mehrzahl von Verarbeitungsmaschinen, welche in Serie miteinander gekoppelt sind. Im Rahmen des als PacSi bezeichneten Simulationsprogramms werden als Simulations-Eingangsparameter (Eingangsgrößen) beispielsweise die mittlere Zeit zwischen zwei Ausfällen (Meantime Between Failure (MTBF)) und die mittlere Zeit zwischen dem Auftreten eines Fehlers und seiner Behebung (Meantime To Repair (MTTR)) sowie die jeweiligen Verarbeitungsgeschwindigkeiten, mit denen die jeweilige Verarbeitungsmaschine betrieben wird, verwendet.

Um eine ausreichend genaue Simulation der Maschinen-Anordnung zu gewährleisten ist es vorgesehen, das Verhalten der einzelnen Maschinen-Anordnungs-Komponenten manuell zu erfassen. Beispielsweise ist es in diesem Zusammenhang bekannt, dass alle Störungen und die jeweilige Verarbeitungsgeschwindigkeit der Maschinen manuell mit einer Stoppuhr erfasst wird. Die manuell erfassten Werte werden in eine Tabelle eingegeben und als Eingangsgrößen im Rahmen der in [1] beschriebenen Simulationseinrichtung verwendet.

Diese Vorgehensweise ist sehr aufwendig und teuer. So nimmt beispielsweise die "Vermessung", d.h. die manuelle Prozessdatenerfassung, bei einer Prozesslinie mit ungefähr 20 Verpackungsmaschinen mehrere Mann-Wochen bis zu mehreren Mann-Monaten in Anspruch.

Ferner ist in [2] ein dreidimensionaler Laserscanner (3D-Laserscanner) beschrieben, welcher kommerziell erhältlich ist und mit welchem die räumliche Geometrie eines Gebäudes, beispielsweise einer Halle und der in dem Gebäude sich befindenden Gegenstände mit einem Linearitätsfehler von 3 mm, bezogen auf ein Scannen von 50 m, ausgemessen und damit erfasst werden kann.

Mittels des Laserscanners wird das jeweilige Gebäudeinnere abgescannt und es wird eine digitale Punktwolke gebildet, das heißt eine Menge von Datenpunkten in einem dreidimensionalen Datenpunktraum, wobei jedem Datenpunkt zumindest ein Helligkeitswert (Luminanzwert), vorzugsweise zusätzlich oder alternativ ein Farbwert (Chrominanzwert), zugeordnet ist.

Jeder Datenpunkt des Scanergebnisses in dem dreidimensionalen Datenpunktraum entspricht einem realen physikalischen Punkt in dem abgescannten Gebäude, genauer gesagt in dem Gebäudeinneren. Die Punktwolke wird verwendet, um die Geometrie des gescannten Gebäudes bzw. gescannten Raums und der sich darin befindenden dreidimensionalen Objekte zu ermitteln und eventuell virtuelle dreidimensionale Objekte zu modellieren, welche den physikalischen Objekten in ihren Außenabmessungen und den Formen entsprechen.

Ergebnis des Laserscans ist gemäß dem erhältlichen Produkt aus [2] ein Datensatz in einem CAD-Datenformat (Computer Aided Design-Datenformat), mit welchem es unter Verwendung eines kommerziell erhältlichen üblichen CAD-Systems ermöglicht ist, "statische" Daten, im Folgenden auch bezeichnet als statische Gebäudedaten und/oder statische Anlagendaten eines Gebäudes und/oder von Maschinen-Anordnungs-Komponenten der Maschinen-Anordnung, unmittelbar zu bearbeiten und gegebenenfalls zu verändern.

Ferner ist in [3] ein teambasiertes interaktives Produktionsplanungs-System, auch bezeichnet als 3D-Planungstisch, bekannt.

Als Eingangsgrößen werden gemäß [3] Daten in einem VRML-Datenformat (Virtual Reality Modeling Language-Datenformat) verwendet, um dreidimensionale Modelle von Maschinen, Logistikkomponenten oder anderen Elementen plattformunabhängig in zweidimensionaler Darstellung oder in dreidimensionaler Darstellung einem Benutzer anzuzeigen.

Ein zweidimensionales Bild einer Produktionsanlage wird gemäß dem in [3] beschriebenen System auf einen Tisch projiziert und ein Benutzer des Systems kann mittels eines reflektierenden Bricks (reflektierender Würfel) ein virtuelles Objekt auswählen, indem er den reflektierenden Würfel auf den Tisch an einer entsprechenden Position über dem virtuellen Objekt setzt. Die Position des Würfels wird mittels einer Kamera erfasst und mittels eines geeigneten Computerprogramms zur Mustererkennung ermittelt. Ist das virtuelle Objekt mittels des Würfels ausgewählt, so kann dieses ebenfalls durch Verschieben des Würfels auf der Tischoberfläche verschoben werden. Die Verschiebung der Würfel wird ebenfalls mit der Kamera erfasst und in dem Computerprogramm erkannt und berücksichtigt, so dass das virtuelle Objekt in entsprechender Weise verschoben wird. Auf diese Weise ist es möglich, sehr einfach und schnell Elemente einer Prozesslinie in ihrer räumlichen Anordnung virtuell zu verschieben und das Ergebnis der Verschiebung zu berechnen und hinsichtlich des äußeren Erscheinungsbildes innerhalb einer Virtuelle-Realität-Umgebung einem Benutzer darzustellen.

Ferner ist ein ebenfalls kommerziell erhältliches Software-Optimierungsprogramm, bezeichnet als ISSOP in [4] beschrieben. Dieses Optimierungsprogramm stellt unterschiedliche, beispielsweise empirisch basierte, gradientenbasierte und modellbasierte Optimierungsverfahren bereit, welche im Rahmen einer Prozessoptimierung eingesetzt werden können.

Der Erfindung liegt das Problem zugrunde, eine computergestützte Simulation einer Maschinen-Anordnung zu schaffen, bei der eine flexible Planung unter Berücksichtigung von Veränderungen in der räumlichen Anordnung der einzelnen Maschinen innerhalb der Maschinen-Anordnung ermöglicht wird.

Das Problem wird durch das Verfahren zur computergestützten Simulation einer Maschinen-Anordnung und durch die Maschinen-Simulations-Anordnung mit den Merkmalen gemäß den unabhängigen Patentansprüchen gelöst.

Bei einem Verfahren zur computergestützten Simulation einer Maschinen-Anordnung, welche eine Vielzahl von Maschinen-Anordnungs-Komponenten aufweist, statische Gebäudedaten und/oder statische Anlagendaten eines Gebäudes und/oder von Maschinen-Anordnungs-Komponenten der Maschinen-Anordnung zu Beginn des Verfahrens erfasst, vorzugsweise mittels eines Laserscanners gemessen. Ferner werden Prozessdaten, welche den Betrieb mindestens einer Maschinen-Anordnungs-Komponente der Maschinen-Anordnung beschreiben, zu Beginn des Verfahrens und/oder während des Verfahrens mittels an den Maschinen-Anordnungs-Komponenten angebrachter mobiler Sensoren gemessen, wobei jeder mobiler Sensor eindeutig mindestens einer Maschinen-Anordnungs-Komponenten zugeordnet ist. Unter Verwendung der statischen Gebäudedaten, der statischen Anlagendaten, der Prozessdaten und unter Verwendung eines Simulationsmodells der Maschinen-Anordnungs-Komponenten als Eingangsgrößen wird die Maschinen-Anordnung in ihrem Verarbeitungsverhalten simuliert.

Unter Verwendung dieser Eingangsgrößen, das heißt anschaulich statischer, einmal eingegebener Eingangsgrößen und dynamischer, kontinuierlich wiederholt im Betrieb der Maschinen-Anordnung mittels mobiler Sensoren erfasster Eingangsgrößen, welche den Betrieb mindestens einer Maschinen-Anordnungs-Komponente der Maschinen-Anordnung beschreiben, wird die Maschinen-Anordnung simuliert.

Die statischen Eingangsgrößen beschreiben beispielsweise die räumliche Struktur der Maschinen-Anordnung und die Prozessdaten beschreiben beispielsweise die Betriebsgrößen, das heißt im Betrieb der Maschinen-Anordnung bzw. der einzelnen Maschinen-Anordnungs-Komponenten erfasste Sensorwerte.

Eine Maschinen-Simulations-Anordnung zur computergestützten Simulation einer Maschinen-Anordnung, welche eine Vielzahl von Maschinen-Anordnungs-Komponenten aufweist, weist eine Mehrzahl von mobilen Sensoren, welche an die Maschinen-Anordnungs-Komponenten anbringbar sind zum Erfassen von Prozessdaten, welche den Betrieb mindestens einer Maschinen-Anordnungs-Komponente der Maschinen-Anordnung beschreiben, auf. Ferner ist eine Einrichtung zum Erfassen von statischen Gebäudedaten und/oder statischen Anlagendaten eines Gebäudes und/oder von Maschinen-Anordnungs-Komponenten der Maschinen-Anordnung vorgesehen. Eine in der Maschinen-Simulations-Anordnung ebenfalls vorgesehene Simulationseinrichtung weist einen ersten Speicher zum Speichern der erfassten statischen Gebäudedaten und/oder der erfassten statischen Anlagendaten, einen zweiten Speicher zum Speichern der erfassten Prozessdaten, einen dritten Speicher zum Speichern von Simulationsmodellen der Maschinen-Anordnungs-Komponenten sowie einen vierten Speicher zum Speichern eines Simulationsprogramms, auf. Weiterhin ist eine Datenverarbeitungseinrichtung vorgesehen, welche derart eingerichtet ist, dass unter Verwendung der statischen Gebäudedaten und/oder statischen Anlagendaten, der Prozessdaten, der Simulationsmodelle und des Simulationsprogramms die Maschinen-Anordnung in ihrem Verarbeitungsverhalten simuliert wird.

Unter der Mehrzahl von Speichern ist in dieser Beschreibung auch eine Mehrzahl von Speicherbereichen eines physikalischen Speichers zu verstehen.

In dem ersten Speicher bzw. in einem ersten Speicherbereich sind somit statische Gebäudedaten und/oder statische Anlagendaten eines Gebäudes und/oder von Maschinen-Anordnungs-Komponenten der Maschinen-Anordnung gespeichert.

In dem zweiten Speicher bzw. in einem zweiten Speicherbereich sind Prozessdaten, welche den Betrieb mindestens einer Maschinen-Anordnungs-Komponente der Maschinen-Anordnung beschreiben, vorzugsweise während des Betriebs der Maschinen-Anordnung mittels an den Maschinen-Anordnungs-Komponenten angebrachter mobiler Sensoren erfasste Prozessdaten, gespeichert.

In dem dritten Speicher bzw. in einem dritten Speicherbereich ist eine Mehrzahl bzw. eine Vielzahl von Simulationsmodellen der jeweiligen in der Maschinen-Anordnung vorgesehenen Maschinen-Anordnungs-Komponenten gespeichert.

In einem vierten Speicher bzw. in einem vierten Speicherbereich ist ein Simulationsprogramm gespeichert, welches bei dessen Ausführung die Verfahrensschritte gemäß dem oben beschriebenen Verfahren durchführt.

Die Erfindung kann anschaulich darin gesehen werden, dass nicht nur statische Daten über die räumliche Anordnung von Maschinen-Anordnungs-Komponenten einer Maschinen-Anordnung in einem CAD-System dargestellt werden oder nicht nur, wie gemäß dem Stand der Technik im Rahmen einer Simulation einer Maschinen-Anordnung ausschließlich die Prozessdaten verwendet werden, sondern dass erfindungsgemäß aufgrund einer Verzahnung der statischen Daten über die Maschinen-Anordnung, das heißt insbesondere die räumlichen Daten über die einzelnen Maschinen-Anordnungs-Komponenten und deren Anordnung innerhalb der Maschinen-Anordnung im Rahmen einer Simulation gemeinsam mit den Prozessdaten, welche mittels mobiler Sensorik erfasst worden ist, und den Betrieb der einzelnen Maschinen-Anordnungs-Komponenten innerhalb der Maschinen-Anordnung beschreibt, eine gegenüber dem Stand der Technik verbesserte, da genauere und flexiblere Simulation der Maschinen-Anordnung erreicht wird.

Ein erheblicher Vorteil der Erfindung ist in der automatisierten Erfassung der Prozessdaten und in der Bereitstellung der exakt, vorzugsweise automatisch, erfassten statischen Daten zu sehen, welche gemeinsam in der Simulation verwendet werden.

Auf diese Weise wird es erfindungsgemäß erstmals möglich, sehr einfach und flexibel in einem Simulationstool die einzelnen logischen Objekte, welche physikalische Objekte, das heißt die Maschinen-Anordnungs-Komponenten einer Maschinen-Anordnung in ihren Eigenschaften beschreiben; interaktiv durch einen Benutzer in gewünschter Weise örtlich zu verschieben und diese Verschiebung unmittelbar in eine Simulation des Verarbeitungsverhaltens der nunmehr in seiner örtlichen Anordnung veränderten Maschinen-Anordnung zu berücksichtigen.

Bevorzugte Weiterbildungen der Erfindung ergeben sich aus den abhängigen Ansprüchen.

Die im Folgenden beschriebenen Ausgestaltungen der Erfindung betreffen das Verfahren zur computergestützten Simulation einer Maschinen-Anordnung und die Maschinen-Simulations-Anordnung.

Die Erfindung kann sowohl in Hardware, d.h. mittels eine speziell eingerichteten elektrischen Schaltung, oder in Software oder in beliebigen Teilen in Hardware und Software realisiert sein.

Gemäß einer Ausgestaltung der Erfindung werden die gemessenen Prozessdaten einer Zwischenverarbeitung, insbesondere einer Datenreduktion, unterzogen. Anders ausgedrückt, es erfolgt eine, vorzugsweise Maschinen-Anordnungs-Komponenten-spezifische, Verarbeitung der erfassten "Rohdaten". Die Verarbeitung kann eine Filterung, eine Zusammenfassung, eine Bildung von Kenngrößen, welche die erfassten Daten beschreiben, eine statistische Analyse der erfassten Daten, usw. sein. Das Ergebnis der Zwischenverarbeitung, die zwischenverarbeiteten Prozessdaten, werden im Rahmen der Simulation verwendet.

Im Rahmen der Simulation werden vorzugsweise Maschinen der Maschinen-Anordnung, vorzugsweise eingerichtet als Verarbeitungsmaschinen, und/oder Fließbänder der Maschinen-Anordnung, welche die einzelnen Maschinen miteinander verbinden, berücksichtigt.

Gemäß einer anderen Ausgestaltung der Erfindung ist es vorgesehen, dass die Prozessdaten aller in der Maschinen-Anordnung vorgesehenen und im Betrieb sich befindlichen Maschinen-Anordnungs-Komponenten im Rahmen der Simulation der Maschinen-Anordnung berücksichtigt werden.

Die statischen Gebäudedaten und/oder statischen Anlagendaten können zu Beginn des Verfahrens einmalig erfasst werden, vorzugsweise werden sie zumindest teilweise mittels eines Laserscanners, besonders bevorzugt zumindest teilweise mittels eines 3D-Laserscanners, wie er beispielsweise in [2] beschrieben ist, erfasst.

Als statische Gebäudedaten werden gemäß einer Ausgestaltung der Erfindung Daten über die Struktur des Gebäudes und/oder Geometriedaten über das Gebäude erfasst und verwendet.

Als statische Anlagendaten können zumindest ein Teil der folgenden Daten verwendet werden:
- Daten über die Struktur der Maschinen-Anordnung und/oder der Maschinen-Anordnungs-Komponenten der Maschinen-Anordnung;
- Geometriedaten über die Maschinen-Anordnung und/oder die Maschinen-Anordnungs-Komponenten der Maschinen-Anordnung;
- Produktionsplandaten;
- Daten über die von der Maschinen-Anordnung zu verarbeitenden Produkte, Zwischenprodukte und/oder Packmittel;
- Organisatorische Daten über den Betrieb der Maschinen-Anordnung und/oder der Maschinen-Anordnungs-Komponenten.

Die statischen Daten werden vorzugsweise vor Beginn des Betriebs der Verpackungslinie, allgemein der Maschinen-Anordnung, einmalig erfasst und liegen üblicherweise zumindest teilweise in einem CAD-Datenformat und/oder in einem allgemeinen ASCII-Datenformat vor.

Die Prozessdaten hingegen sind dynamische Daten, welche mittels an den Maschinen-Anordnungs-Komponenten angebrachter mobiler Sensoren kontinuierlich wiederholt ermittelt werden. Mittels der Sensoren werden als Prozessdaten gemäß einer Ausgestaltung der Erfindung zumindest ein Teil der folgenden Daten ermittelt und im Rahmen der Simulation verwendet:
- Ausfalldaten über einen Ausfall einer Maschinen-Anordnungs-Komponente;
- Geschwindigkeitsdaten einer Maschinen-Anordnungs-Komponente;
- Daten, mit denen die Verarbeitungsmenge von Artikeln in einer Maschinen-Anordnungs-Komponente pro Zeiteinheit angegeben wird;
- eine Zeitangabe, mit der der Zeitpunkt angegeben wird, zu dem die Daten erfasst worden sind.

Es hat sich herausgestellt, dass insbesondere die oben beschriebenen Prozessdaten sich sehr gut eignen, um eine genaue und verlässliche Simulation einer Prozesslinie zu gewährleisten.

Gemäß einer anderen Ausgestaltung der Erfindung ist es vorgesehen, dass im Rahmen der Simulation der Maschinen-Anordnung Virtuelle-Realität-Planungsdaten (Virtual Reality-Planungsdaten) berücksichtigt werden. Die Virtuelle-Realität-Planungsdaten werden vorzugsweise mittels einer computergestützten Virtuelle-Realität-Planungseinrichtung gebildet und als Eingangsgrößen der Simulation eingegeben, wobei die Virtuelle-Realität-Planungseinrichtung eine teamorientierte und teambasierte interaktive Planungseinrichtung sein kann.

Besonders bevorzugt wird das in [3] beschriebene System, der 3D-Planungstisch des Fraunhofer Instituts für Produktionstechnik und Automatisierung, eingesetzt.

Auf diese Weise ist es im Rahmen der Simulation vorteilhafterweise sehr einfach und flexibel möglich, ohne zusätzlichen Aufwand auch in einem interaktiven Vorgehen mit einem Benutzer eines Planungstisches statische Daten, wie beispielsweise die örtliche Anordnung der Maschinen innerhalb einer Prozesslinie zu verändern und diese Veränderungen unmittelbar im Rahmen der Simulation zu berücksichtigen.

Hierzu ist bevorzugt eine Integrationsplattform vorgesehen, welche die Datenformate der, vorzugsweise von einem 3D-Laserscanner, erhaltenen statischen Gebäudedaten oder statischen Anlagendaten, sowie das Datenformat der von dem Virtuelle-Realität-Planungstisch erzeugten Daten in ein Datenformat umwandelt, welches von dem Simulationsprogramm verwendet werden kann.

Für das Simulationsprogramm ist vorzugsweise vorgesehen, dass dieses in einem Browser-Programm, vorzugsweise in einem World-Wide-Web-Browser-Programm (beispielsweise Internet Explorer, Netscape Navigator oder NSCA Mosaic), integrierbar bzw. mittels diesem einem Benutzer darstellbar ist, vorzugsweise mittels eines Java-Plugins oder eines Applets, so dass die Simulation und die Planung unter Verwendung des Internet in einem beliebigen verteilten System mit beliebiger Rechnerarchitektur eingebettet sein kann.

Zumindest ein Teil der Maschinen können als Verarbeitungsmaschinen eingerichtet sein, besonders bevorzugt als Verpackungsmaschinen.

Gemäß einer Ausgestaltung der Erfindung ist zumindest ein Teil der Maschinen als eine der folgenden Maschinen eingerichtet:
- Flaschenaufrichter-Maschine,
- Materialabfüll-Maschine,
- Kappensortier-Maschine,
- Kappenausrichter-Maschine,
- Flaschenverschließ-Maschine,
- Flaschenschuh-Ausheber-Maschine,
- Flaschenetikettier-Maschine,
- Codier-Maschine,
- Sticker-Maschine,
- Folienschrumpfer-Maschine,
- Sammelpackungs-Aufrichter-Maschine,
- Schachtelverpackungs-Maschine,
- Schachtelverschließ-Maschine,
- Schachteletikettendruck-Maschine,
- Kontrollwaage,
- Palettiermaschine.

Unter Verschmelzung der oben beschriebenen, an sich bekannten drei Komponenten, eines Simulationsprogramms, beispielsweise des Simulationsprogramms PacSi, erfindungsgemäß erweitert zur Verarbeitung der Daten gemäß den beschriebenen Verfahrensschritten, einem mittels eines 3D-Laserscanners gebildeten Modells von einem Gebäude und/oder der Maschinen-Anordnungs-Komponenten einer Maschinen-Anordnung sowie eines Virtuelle-Realität-Planungssystems ermöglicht eine schnelle und kostengünstige Planung oder Veränderung einer Verpackungslinie.

Ein Ausführungsbeispiel der Erfindung ist in den Figuren dargestellt und wird im Folgenden näher erläutert.

Es zeigen
- Figuren 1 a bis 1 c: eine Maschinen-Anordnung gemäß einem Ausführungsbeispiel der Erfindung;
- Figur 2: ein symbolisches Blockdiagramm, in dem das System zum Erfassung und Simulieren einer Maschinen-Anordnung gemäß einem Ausführungsbeispiel der Erfindung dargestellt ist;
- Figur 3: ein Blockdiagramm, in dem der Datenfluss der einzelnen Simulationsparameter von der Verpackungslinie bis zu der Simulation und Optimierung in dem Simulationsprogramm dargestellt ist.

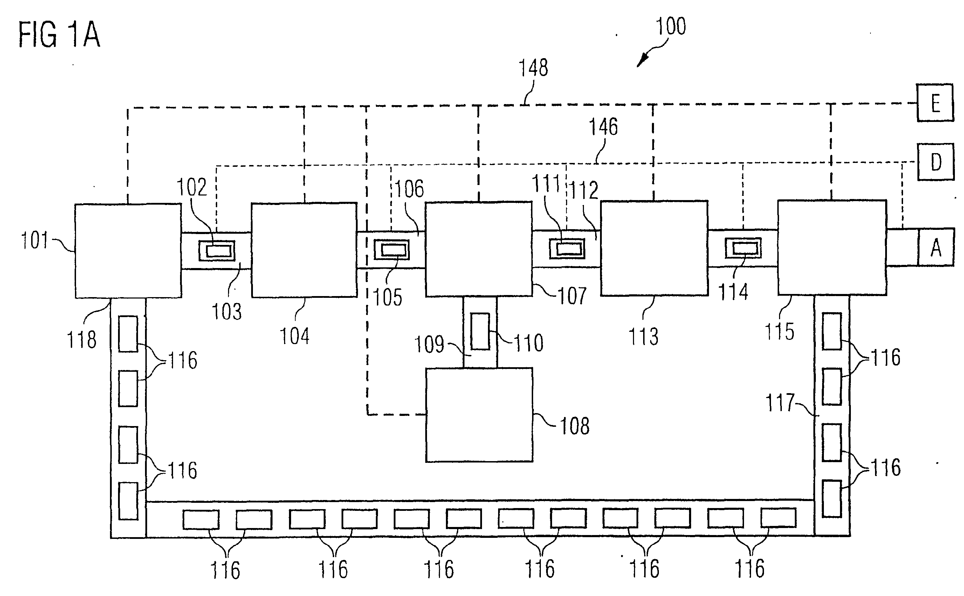

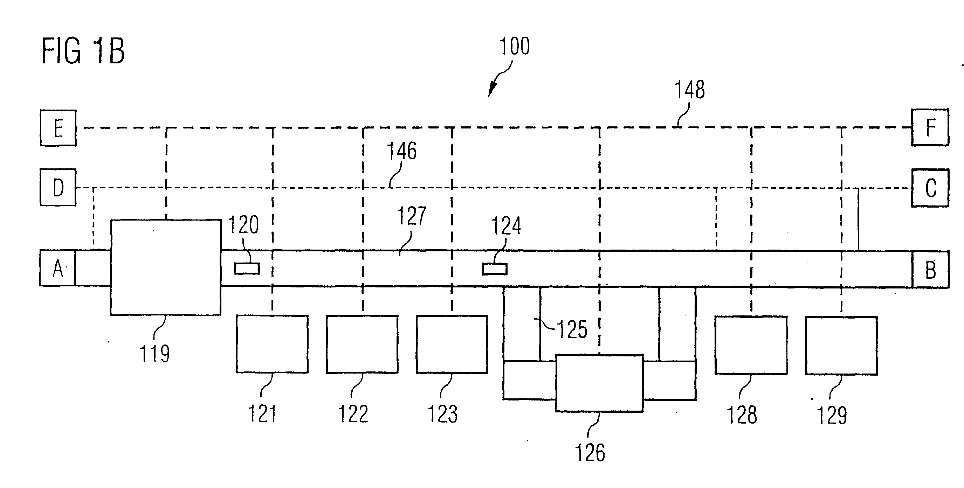

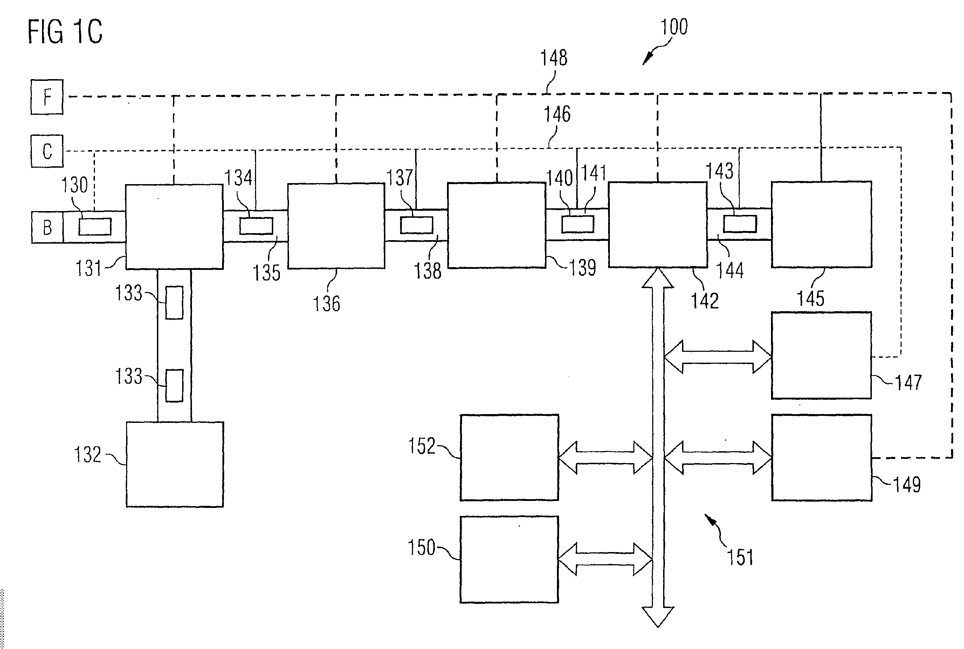

**Fig.1a** bis **Fig.1c** zeigen eine Maschinen-Anordnung 100 gemäß einem Ausführungsbeispiel der Erfindung.

Die Maschinen-Anordnung 100 weist eine Flaschenaufrichter-Maschine 101 auf, welche derart eingerichtet ist, dass der Flaschenaufrichter-Maschine 101 zugeführte leere Flaschen 102 in im Folgenden näher beschriebene Flaschenschuhe 116 eingestellt werden, um somit eine erhöhte Standfestigkeit der Flaschen 102 zu gewährleisten.

Nachdem die Flaschen in die Flaschenschuhe 116 eingestellt sind, werden die Flaschen 102 mittels eines Förderbandes (Fließbandes) 103 einer Abfüll-Maschine 104 zugeführt. In der Abfüll-Maschine 104 wird allgemein ein jeweils in einen Behälter einzubringendes Produkt in den Behälter eingebracht, gemäß diesem Ausführungsbeispiel wird die gewünschte Flüssigkeit, nämlich Haarshampoo, in die der Abfüll-Maschine 104 zugeführte Flasche 102 abgefüllt.

Die mit der Flüssigkeit versehene Flasche 105 wird mittels eines weiteren Fließbandes 106 von der Abfüll-Maschine 104 zu einer Kappenausrichter-Maschine 107 transportiert und dieser zugeführt. Über einen Nebeneingang werden in einem Nebenstrom der Kappenausrichter-Maschine 107 von einer Kappensortier-Maschine 108 über ein weiteres Fließband 109 Verschlusskappen 110 zugeführt, welche von dem Kappenausrichter 107 auf die gefüllten Flaschen 105 aufgebracht werden.

Die Flaschen 111 mit dem aufgebrachten Deckel werden über ein weiteres Fließband 112 einer Flaschenverschließ-Maschine 113 zugeführt, von welcher die Flaschen 111 mit den Kappen 110 vollständig verschlossen werden, so dass das Haarshampoo nicht mehr aus der Flasche 111 heraus fließen kann.

Die mit den Kappen 110 verschlossenen Flaschen 114 werden einer Flaschenschuh-Aushebe-Maschine 115 zugeführt, in welcher die gefüllten und mit den Kappen verschlossenen Flaschen 114 aus den Flaschenschuhen 116 herausgehoben werden. Die nunmehr leeren Flaschenschuhe 116 werden über ein weiteres Fließband 117 einem Nebenstrom-Eingang 118 der Flaschenaufrichter-Maschine 101 erneut zugeführt.

Die Flaschen 114 werden nachfolgend mittels eines zusätzlichen Fließbandes 118 einer Etikettier-Maschine 119 zugeführt, von welcher vorgebbare Etiketten auf die Flaschen 114 aufgebracht werden.

Auf die etikettierten Flaschen 120 werden mittels einer Codier-Maschine 121 zusätzliche vorgebbare Codes aufgebracht, beispielsweise mittels Tintenbedüsung. Ferner wird mittels zweier Sticker-Maschinen 122, 123 zusätzliche Information auf die Flaschen geklebt.

Für den weiteren Produktionsverlauf werden zwei Fälle unterschieden, einerseits die Einzelflaschen-Verpackung und andererseits die Mehrflaschen-Verpackung, das heißt die Zusammenfassung einer vorgebbaren Anzahl von Flaschen, welche gemeinsam in einer Folie verschweißt werden. Gemäß diesem Ausführungsbeispiel ist es möglich, dass eine beliebig vorgebbare Anzahl von Flaschen, vorzugsweise fünf Flaschen, gemeinsam in einer Folie verschweißt werden. Ist dies gewünscht, so werden die etikettierten und mit zusätzlicher Information gekennzeichneten Flaschen 124 über ein Neben-Fließband 125 einer Fünfer-Folienschrumpfer-Maschine 126 zugeführt, in welcher jeweils fünf Flaschen gemeinsam in einer Folie verpackt und verschweißt werden und die Folie mit einem Schrumpfofen geschrumpft wird. Sollen die Flaschen 124 einzeln weiter verpackt werden, so werden die etikettierten und mit zusätzlicher Information gekennzeichneten Flaschen 124 über das Haupt-Fließband 127 weitergeführt, an der Folienschrumpfer-Maschine 126 vorbei.

Anschließend sind im weiteren Produktionsweg zwei zusätzliche Sticker-Maschinen 128, 129 vorgesehen, mittels welchen zusätzliche Informationen auf die Folien, in die die Flaschen verpackt sind, aufgebracht werden können.

Die auf diese Weise vollständig gekennzeichneten Flaschen 130 werden einer Schachtelverpackungs-Maschine 131 zugeführt, mittels welcher die Flaschen 130 in die Schachtelverpackungs-Maschine 131 über einen Nebeneingang zugeführten Schachteln 133 gepackt werden. Die Schachteln 133 werden mittels einer Sammelpackungs-Aufrichter-Maschine 132 aufgerichtet, in vorgegebener Weise gefaltet dem Nebeneingang der Schachtelverpackungs-Maschine 131 zugeführt.

Die mit den Flaschen gefüllten Schachteln 134 werden über ein weiteres Fließband 135 einer Schachtelverschließ-Maschine 136 zugeführt, in welcher die Schachteln 134 verschlossen werden.

Die verschlossenen Schachteln 137 werden, wiederum mittels eines Fließbandes 138, von der Schachtelverschließ-Maschine 136 zu einer Schachteletikettendruck-Maschine 139 transportiert, in welcher den Schachteln 137 vorgebbare Etiketten aufgedruckt werden. Die mit Etiketten versehenen Schachteln 140 werden, wiederum mittels eines Fließbandes 141, einer Kontrollwaage 142 zugeführt, von der das korrekte Gewicht des jeweils gefüllten und verschlossenen Schachtel 137 ermittelt wird, um zu überprüfen, ob die Schachtel 137 tatsächlich vollständig gefüllt sind. Sind die Schachteln nicht vollständig gefüllt, so werden die nicht korrekt gefüllten Schachteln ausgeschleust und die Flaschen in neue Schachteln gefüllt. Die korrekt gefüllten Schachteln 143 werden von der Kontrollwaage 142 mittels eines weiteren Fließbandes 144 einer Palettiermaschine 145 zugeführt, von welcher die Schachteln 143 auf Paletten gestapelt werden und nachfolgend ausgeliefert werden.

Sowohl an den Hauptstrom-Eingängen der einzelnen Maschinen als auch an den Nebenstrom-Eingängen der Maschinen, über die beispielsweise Kappen oder Schachteln der jeweiligen Maschine zugeführt werden, allgemein zur Bearbeitung der eigentlich zu bearbeitenden Guts verwendetes zugeliefertes Material, und an den Ausgängen der Maschinen und an beliebigen vorgebbaren Positionen eines Fließbandes sind Sensoren, beispielsweise Lichtschranken, alternativ oder zusätzlich beispielsweise Drucksensoren oder andere, für die jeweils gewünschten Datenerfassung geeignete Sensoren, d.h. allgemein eine mobile Sensorik, vorgesehen, um das Passieren von Elementen, beispielsweise einer Flasche, durch eine Lichtschranke zu ermitteln und beispielsweise mit ebenfalls vorhandenen Zählern, welche mit den Lichtschranken gekoppelt sind, diese Ereignisse zu zählen.

Die Fließbänder sind mittels eines ersten Feldbusses 146, gemäß diesem Ausführungsbeispiel einem Profibus, mit einer Bänder-Steuerungseinheit 147, gemäß diesem Ausführungsbeispiel einer Speicherprogrammierbaren Steuerung (SPS), gekoppelt.

Mittels eines zweiten Feldbusses, gemäß diesem Ausführungsbeispiel ebenfalls einem Profibus 148, sind die Maschinen mit einem Prozessstabilisierungs-Steuerungsrechner 149 verbunden.

Mittels der Bänder-Steuerungseinheit 147 werden den einzelnen Fließbändern Steuerungsgrößen zugeführt, mit denen die Geschwindigkeit der einzelnen Fließbänder eingestellt wird. Mittels des Prozessstabilisierungs-Steuerungsrechners 149 werden den einzelnen Maschinen und den in den Maschinen vorzugsweise vorgesehenen speicherprogrammierbaren Steuerungen mittels des zweiten Feldbusses 148 Steuergrößen zugeführt, gemäß diesem Ausführungsbeispiel Soll-Geschwindigkeitswerte, mit denen die jeweilige Soll-Arbeitsgeschwindigkeit der Maschine unter Verwendung der speicherprogrammierbaren Steuerung der jeweiligen Maschine eingestellt wird.

In einer alternativen Ausführungsform werden für den Fall, dass einige Maschinen nicht Feldbus-kompatibel sind, vorgebbare Signale mittels separater Fern-Eingangs-/Ausgangsschnittstellen (nicht dargestellt) erfasst bzw. entsprechende Steuerungsgrößen gemäß dem jeweiligen proprietären Datenformat, das von der jeweiligen Maschine unterstützt wird, der jeweiligen Maschine zugeführt.

Mittels des ersten Feldbusses 146 und/oder des zweiten Feldbusses 148 werden ferner die von den Sensoren aufgenommenen Daten einem Messdaten-Erfassungsrechner 150, welcher mit der Bänder-Steuerungseinheit 147 sowie mit dem Prozessstabilisierungs-Steuerungsrechner 149 über ein lokales Kommunikationsnetz 151, gemäß diesem Ausführungsbeispiel dem Ethernet, gekoppelt ist, zugeführt und von diesem in einer Messdaten-Datenbank gespeichert. Die Messdaten-Datenbank wird von einem Datenbankrechner 150 verwaltet.

Die Sensoren können gegebenenfalls über eine Funkschnittstelle, beispielsweise eingerichtet gemäß dem Bluetooth-Standard, mit dem Messdaten-Erfassungsrechner 150 gekoppelt sein.

In einem Simulationsrechner 152 ist ein Simulationsprogramm, gemäß diesem Ausführungsbeispiel das technische Computer-Simulationsprogramm PacSi gespeichert, welches derart eingerichtet und angepasst ist, dass es die im Folgenden beschriebenen Verfahrensschritte durchführen kann.

Der Simulationsrechner 152 ist ebenfalls mit der Ethernet 151 und darüber mit den oben genannten Rechnern 147, 149 und 150 gekoppelt, so dass zwischen den einzelnen Rechnern 147, 149, 150 Daten ausgetauscht werden können.

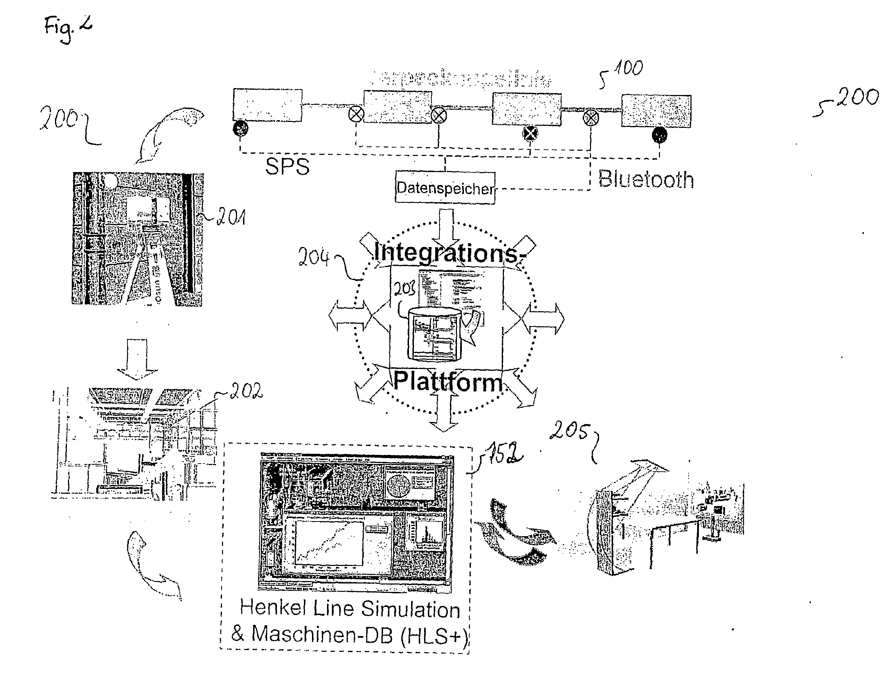

Wie in dem Simulations- und Optimierungssystem 200 in **Fig.2** dargestellt ist, wird die Maschinen-Anordnung 100 und das Gebäude, in dem sich die Maschinen-Anordnung 100 befindet, mittels eines 3D-Laserscanners 201, eingerichtet wie in [2] beschrieben und an sich kommerziell erhältlich, dreidimensional vermessen, d.h. abgescannt.

Das Gebäude, in dem die Maschinen-Anordnung 100 angeordnet ist, dient als Scan-Bezugssystem, in dem der Scan mittels des 3D-Laserscanners 201 durchgeführt wird. Ergebnis des Ausmessens bzw. des Laserscans ist eine Punktwolke, das heißt eine Menge von Datenpunkten in einem dreidimensionalen Datenraum, wobei jeder Datenpunkt einem realen Punkt in dem realen physischen Gebäude entspricht. Jedem Datenpunkt der Punktwolke ist ein Helligkeitswert (Luminanzwert) und/oder Farbwert (Chrominanzwert) zugeordnet. Somit repräsentiert die Gesamtheit der Datenpunkte ein logisches Abbild der rein räumlichen Struktur des Gebäudes sowie der Maschinen-Anordnung und zusätzlicher in dem Gebäude enthaltener Elemente, beispielsweise Rohrleitungen, Vorsprünge, Stützen, etc.

Aus der Punktwolke wird manuell oder unter Verwendung von an sich bekannten Verfahren der digitalen Bildverarbeitung und der Objektsegmentierung automatisch rechnergestützt ein Modell einer digitalen dreidimensionalen Fabrik erstellt, wobei auch einzelne räumliche Objektmodelle von in dem Gebäude enthaltener Elemente, sowohl von Rohrleitungen, Stützen, Vorsprüngen, Maschinen, Fließbänder und anderer sich in dem Gebäude befindenden Strukturen erstellt werden können. Ergebnis dieser an sich bekannten Vorgehensweise ist eine digitale Beschreibung des Gebäudes und der Maschinen-Anordnung in objektorientierter Form, wobei die Daten häufig in Form von Linienmodellen und in einem CAD-Datenformat vorliegen.

Die mittels des Laserscanners 201 gebildeten Daten und insbesondere das/die von einem Linienmodell-Erzeugungsrechner 202 erzeugte(n) Linienmodell(e) des Gebäudes und der Maschinen-Anordnung 100 werden in einer zusätzlichen Gebäude- und Maschinen-Datenbank 203 in einem Integrations-Plattform-Rechner 204 gespeichert. Der Integrations-Plattform-Rechner 204 ist sowohl mit den oben beschriebenen Rechnern 147, 149, 150, 152 als auch mit dem die Datenauswertung und die Bildung des Linienmodells und der Datenobjekte aus dem Laserscan erzeugenden Linienmodell-Erzeugungsrechner 202 gekoppelt.

Der Integrations-Plattform-Rechner 204 ist derart eingerichtet, dass er die Datenformate der von dem 3D-Laserscanner 201 erhaltenen statischen Gebäudedaten oder statischen Anlagendaten, sowie das Datenformat der von dem Virtuelle-Realität-Planungstisch 205 erzeugten Daten in ein Datenformat umwandelt, welches von dem Simulationsprogramm 152 im Rahmen der Simulation verwendet werden kann.

Mittels der ebenfalls im Zusammenhang mit dem in [2] beschriebenen System erhältlichen iQvolution-Software und dem 3D-Laserscanner 201 ist es somit ermöglicht, Strukturen und Objekte in dem Gebäude, insbesondere der Maschinen-Anordnung 100 zu erkennen und anzupassen. Mittels direkten Messens unter Verwendung des 3D-Laserscanners 201 werden die digitalen Daten ermittelt und es wird mittels der Software von iQvolution eine Schnittstelle zu einem an sich bekannten CAD-System bereitgestellt.

Die erstellten Objekte der Maschinen-Anordnung 100 sind parametrisierbar und in ihrer räumlichen Struktur in der Gebäude- und Maschinen-Datenbank 203 gespeichert. In der Gebäude- und Maschinen-Datenbank 203 sind zusätzlich Daten gespeichert, die die Charakteristika hinsichtlich der Verarbeitung und des Maschinentyps näher erläutern.

So sind gemäß diesem Ausführungsbeispiel der Erfindung in der Gebäude- und Maschinen-Datenbank 203 zu den von dem 3D-Laserscanner erhaltenen Daten über Maschinen, allgemein den Maschinen-Anordnungs-Komponenten, folgende Zusatzinformationen zu einem Maschinen-Objekt, welches eine Maschine beschreibt, gespeichert:
- Eine Angabe des Maschinen-Typs oder eine Angabe des Maschinen-Typs einer der betrachteten Maschine übergeordneten Maschine, falls die betrachtete Maschine ein Bestandteil der übergeordneten Maschine ist;
- eine Angabe einer Ausbringung von Artikeln durch die Maschine in Stück pro Minute, wobei sowohl die Angabe einer Minimalausbringung, einer Nominalausbringung als auch einer Maximalausbringung gespeichert sein kann;
- eine Angabe eines Volumenbereichs von Elementen, die mittels der Maschine verarbeitet werden können, sowohl ein Minimumvolumen als auch ein Maximumvolumen eines mittels der betrachteten Maschine zu verarbeitenden Artikels;
- eine Angabe über die Arbeitsweise der betrachteten Maschine, beispielsweise ob die Maschine intermittierend oder kontinuierlich arbeitet
- aus der Angabe des Laserscans oder aus einer Herstellerangabe erhalten eine Angabe über die Maschinenabmessungen, insbesondere die Länge, Breite, Höhe der Maschine;
- eine Angabe über die Einlaufhöhe der Artikel in die betrachtete Maschine über dem Boden, angegeben in mm;
- eine Auslaufhöhe der Artikel aus der betrachteten Maschine über dem Boden, angegeben in mm;
- das Gewicht der Maschine in kg;
- der Energiebedarf zum Betrieb der Maschine, wahlweise angegeben elektrisch in KW/h oder angegeben penumatisch in Nm³/h.

Auf diese Weise ist eine sehr genaue spezifische und für die Maschine sowohl in ihrer Arbeitsweise als auch in ihren räumlichen Abmessungen aussagekräftige Beschreibung in der Gebäude- und Maschinen-Datenbank 203 gespeichert. Die Beschreibung wird, wie im Folgenden noch näher erläutert wird, im Rahmen der Simulation mittels des Simulationsrechners 152 verwendet.

Zusammengefasst werden mittels des 3D-Laserscanners 201 die Lage, die Geometrie, die Struktur und die Ausprägung von Linienelementen, das heißt von Maschinen der Maschinen-Anordnung 100, der Maschinen-Anordnung selbst, das heißt der Prozesslinie sowie der Hallenumgebung, das heißt der Gebäudeumgebung, erfasst.

Erfasst werden somit Parameter der Maschinen-Anordnung 100, das heißt gemäß diesem Ausführungsbeispiel der Abfüll- und Verpackungsmaschinen-Anordnung, wobei die gesamte Maschinen-Anordnung mit folgenden Parametern erfasst wird:
- Anfang der Maschinen-Anordnung 100: Flaschenaufrichter-Maschine 101;
- Ende der Maschinen-Anordnung 100: Palettiermaschine 145;
- der Produktweg, das heißt die Maschinen-Anordnungs-Topologie, insbesondere die Länge der Wegstrecken, die Verknüpfung der Wegstrecken (Weichen), die Anzahl von Bahnen in der Maschinen-Anordnung 100, das Fassungsvermögen einer Einzelstrecke, Durchgänge durch Wände und Kabinen etc., welche in dem Gebäude vorgesehen sind, sowie Leergut-Rücktransport;
- Maschineneingänge und Maschinenausgänge;
- Transportplätze und Bedienplätze;
- Bedientableauposition;
- Positionsmarker (beispielsweise ein DinA4-Blatt) für
   - Lichtschranken (beispielsweise zur mobilen Datenerfassung),
   - Anfang und Ende von Anlagen, etc.

Ferner wird mittels des 3D-Laserscanners 201 auch die Umgebung der Maschinen-Anordnung 100 mit folgenden Parametern erfasst:
- Höhenrestriktionen und Wandrestriktionen mit
   - Deckenstrukturen,
   - Wandstrukturen,
   - Deckendurchbrüche und Wanddurchbrüche;
   - Bodenstruktur und Bodenunebenheiten,
   - Türen, Fenster, Treppen;
- Förderer außerhalb der direkten Maschinen-Anordnung 100 (beispielsweise angeordnet unter der Decke des Gebäudes);
- Stahlbau und technische Gebäudeausrüstung, insbesondere
   - Rohre und Rohrtrassen zum Transport von: Gas, Wasser, Druckluft, Wärme, etc.,
   - Kanäle, Elektrokanäle, Lüftungskanäle, etc.,
   - Anschlussstellen für Versorgungen mit Elektrizität, Medien und Material;
   - Schaltschränke außerhalb der Maschinen-Anordnung 100.

Von den oben beschriebenen Sensoren werden Daten ermittelt während des Betriebs der Verpackungsmaschinen der Maschinen-Anordnung 100.

Die Daten stellen somit die Basis für die Ermittlung der Prozessinformationen dar und werden auch als Prozessdaten bezeichnet.

Gemäß diesem Ausführungsbeispiel sind je nach Bedarf an den einzelnen Verpackungsmaschinen der Maschinen-Anordnung 100, wie oben beschrieben, Sensoren zum Erfassen insbesondere der Durchlaufmenge von Produkten durch die jeweilige Maschine, die Geschwindigkeit der Maschine, der Zustand der Maschine usw. vorgesehen.

Die ermittelten Messdaten sind in der Messdaten-Datenbank, wie oben erläutert, gespeichert und werden entsprechend dem Integrations-Plattform-Rechner 204 bereitgestellt.

Ferner ist in dem Simulations- und Optimierungssystem 200 noch ein in [3] beschriebener 3D-Planungstisch 205 vorgesehen. Der 3D-Planungstisch 205 stellt eine Eingabeoberfläche und Visualisierungsoberfläche dar, mit deren Hilfe eine interaktive Zusammenarbeit im Team zwischen allen beteiligten Benutzern des 3D-Planungstisches 205 ermöglicht ist.

Wie in [3] beschrieben und an sich kommerziell erhältlich, weist der 3D-Planungstisch 205 mehrere Komponenten auf, insbesondere
- einen Beamer zur 3D-Projektion,
- einen Beamer zur 2D-Projektion,
- eine Bilderkennungseinheit sowie
- einen üblichen, leistungsfähigen Personal Computer.

Ferner sind ein Spiegel und ein Tisch und eine Vielzahl von reflektierender Bricks (reflektierender Würfel) vorgesehen, sowie eine Leinwand, auf welcher die 3D-Projektion mittels des Beamers dargestellt wird.

Mit der Bilderkennungseinheit wird die Position beliebig vieler reflektierender Würfel sehr schnell erkannt. Ein Objekt wird ausgewählt, indem ein Benutzer einen reflektierenden Würfel auf das auszuwählende Objekt in der Projektionsoberfläche, das heißt auf der Tischoberfläche des 3D-Planungstisches 205, stellt.

Das System erkennt den reflektierenden Würfel und identifiziert das unter ihm liegende, d.h. an diese Position projizierte logische Objekt. Das logische Objekt wird markiert und kann mittels des Benutzers durch Verschieben des reflektierenden Würfels auf der Tischoberfläche auch logisch innerhalb des Computerprogramms verschoben werden.

Dies erfolgt durch eine logische Verknüpfung zwischen der Position des reflektierenden Würfels auf der Tischoberfläche mit der Position des logischen Objekts innerhalb des Simulationsraums.

Wird der reflektierende Würfel somit auf der Tischoberfläche verschoben, so führt das System das Objekt an die gewünschte neue Position des reflektierenden Würfels in dem Computerprogramm entsprechend nach.

Mittels des 3D-Planungstisches 205 und der zugehörigen Software sind die in der Maschinen-Datenbank 203 gespeicherten Maschinenobjekte auswählbar und an einen virtuellen Ort des digitalen, logischen virtuellen Gebäudes verschiebbar.

Auf diese Weise ist es möglich, mittels der reflektierenden Würfel Maschinenobjekte, die in ihrer Position innerhalb eines physikalischen Gebäudes mittels des 3D-Laserscanners 201 ermittelt worden sind und in ihren Eigenschaften detailliert beschrieben sind, logisch zu verschieben und die auf diese Weise veränderten logischen Geometriedaten in der Maschinen-Datenbank 203 bzw. in einer zusätzlichen Geometriedaten-Datenbank in dem Integrations-Plattform-Rechner 204 zu speichern und somit einer mittels des Simulationsrechners 152 durchgeführten Simulation als Eingangsgröße zuzuführen. Es ist erfindungsgemäß auch möglich, in das virtuelle Gebäude im Rahmen der Simulation virtuelle Maschinen einzufügen und somit eine vollständige Verpackungsmaschinen-Anordnung virtuell aufzubauen.

Der Simulationsrechner 152 führt eine Simulation der Maschinen-Anordnung 100 somit unter Verwendung der mittels des 3D-Laserscanners 201 durchgeführten Laserscans erfassten Daten, der mittels der mobilen Sensorik, gebildet durch die oben beschriebenen Sensoren an den Maschinen-Anordnungs-Komponenten, erfassten Prozessdaten und der gegebenenfalls veränderten Geometriedaten, verändert mittels des 3D-Planungstischs 205, durch.

Auf diese Weise ist sowohl eine Simulation als auch unter Verwendung des ebenfalls kommerziell erhältlichen Software-Tools ISSOP, wie in [4] beschrieben und kommerziell erhältlich, eine Optimierung des Betriebs der Maschinen-Anordnung 100 ermöglicht.

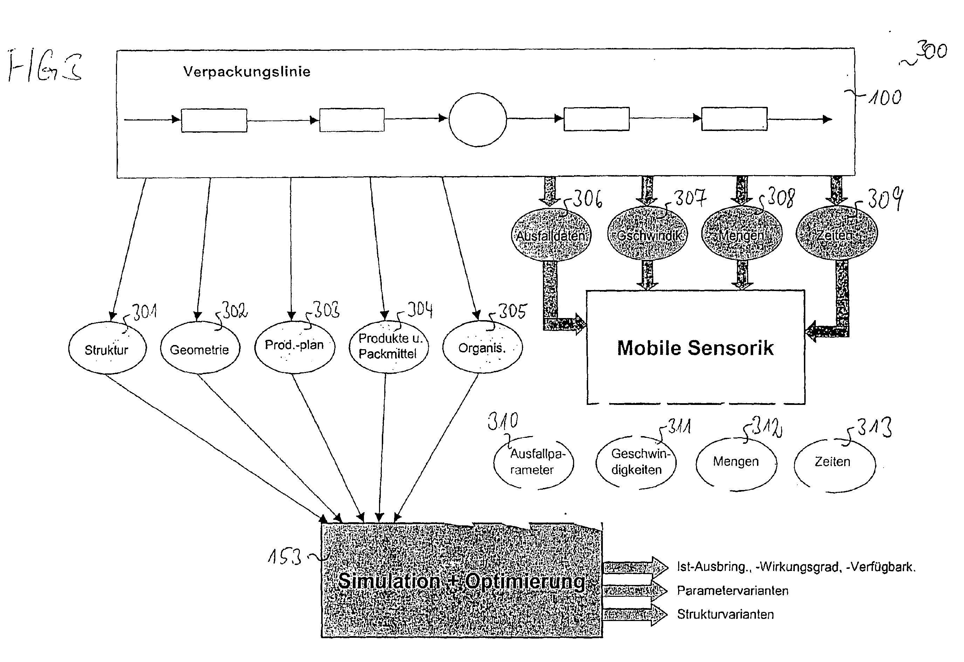

**Fig.3** zeigt im Detail die jeweils im Rahmen der Simulation verwendeten Daten in Form eines Blockdiagramms 300.

Bezogen auf die Maschinen-Anordnung 100 werden mittels des 3D-Laserscanners 201 insbesondere folgende Daten erfasst:
- Statische Daten, welche nur genau einmal erfasst bzw. eingegeben werden, insbesondere:
   - Strukturdaten 301, insbesondere der Aufbau der Maschinen-Anordnung 100, in der Maschinen-Anordnung 100 enthaltene Maschinenelemente und deren Verkettung, das heißt Angaben darüber, wie die einzelnen Maschinen miteinander verbunden sind,
   - Geometriedaten 302, insbesondere Angaben über Länge, Breite, Inhalte der jeweiligen Maschinen der Maschinen-Anordnung 100;
   - Produktionsplandaten 303, insbesondere Daten über die planmäßige mittels der Maschinen der Maschinen-Anordnung 100 zu verarbeitenden Menge an Artikeln, einer Angabe über die jeweils zu verarbeitenden Artikel sowie eventuell geplante Umrüstungen an den Maschinen oder der Maschinen der Maschinen-Anordnung 100;
- Produktdaten und Packmitteldaten 304, insbesondere bei verschiedenen Produktionsarten;
- Organisatorische Daten 305, insbesondere Daten über unterschiedliche Arbeitsschichten der Mitarbeiter und Bediener der Maschinen, die Pausen, welche die Maschinen bzw. die Benutzer der Maschinen einzuhalten haben sowie eine Angabe über die Anzahl der Maschinenbediener.

Mittels der mobilen Sensorik werden dynamische Daten kontinuierlich im Betrieb der Maschinen der Maschinen-Anordnung 100 erfasst, wobei insbesondere folgende Daten ermittelt werden:
- Ausfalldaten 306, insbesondere Angaben über Eigenstörungen der Maschinen, über an den Maschinen auftretenden Staus von Artikeln, bzw. Angaben über einen Mangel an Artikeln für jedes Element, das heißt für jede Maschine oder für jedes Fließbandelement der Maschinen-Anordnung;
- Geschwindigkeitsdaten 307, insbesondere Daten über den Ist-Geschwindigkeitsverlauf für jede Maschine bzw. für jedes Element der Maschinen-Anordnung 100;
- Mengendaten 308, insbesondere Angaben über die zugeführten Mengen, abgeführte Mengen bzw. ausgeschleuste Mengen der Artikel für jedes Element, welches mittels der Sensoren überwacht wird;
- Zeitdaten 309, insbesondere Ist-Zeitangaben für Ausfalldaten, Ist-Zeitangaben für Geschwindigkeiten und Ist-Zeitangaben für die Produktion der einzelnen Elemente der Maschinen-Anordnung 100.

Ferner werden aus den mittels der Sensoren erfassten Daten abgeleitete Daten ermittelt, insbesondere folgende Daten:
- Ausfallparameterdaten 310, insbesondere Angaben über die Ausfalldauer, den Ausfallabstand, über Geschwindigkeit und Zeit für jedes Element der Maschinen-Anordnung 100;
- Geschwindigkeitsdaten 311, insbesondere die Angabe über die Geschwindigkeit, betrachtet in einem vorgegebenen Zeitintervall für jedes Element der Maschinen-Anordnung 100;
- Mengenangaben 312, insbesondere Angaben über die Mengen, betrachtet in einem Geschwindigkeitsintervall und in einem vorgegebenen Zeitintervall für jedes Element der Maschinen-Anordnung 100; und
- Zeitangaben 313, insbesondere Zeitstempel und Zeitgliederungsdaten.

Diese Daten werden in den Simulationsrechner 152 gegebenenfalls nach erfolgter Umwandlung des oder der Datenformate der erfassten Daten, welche von dem Integrations-Plattform-Rechner 204 gebildet worden sind, eingegeben und mittels des Simulationsprogramms verarbeitet, wobei das Simulationsprogramm aus den oben beschriebenen Eingangsgrößen insbesondere eine Ist-Ausbringung der jeweiligen Maschine, einen Wirkungsgrad der jeweiligen Maschine sowie eine Verfügbarkeit der jeweiligen Maschine ermittelt.

In diesem Dokument sind folgende Veröffentlichungen zitiert:
[1] Erhältlich am 20.03.2003 im Internet unter der Adresse:
   http://www.ika.tz-dd.de
[2] iQvolution, Produktprospekt über den iQvolution Laserscanner und die zugehörige iQvolution Software
[3] Teambasierte interaktive Produktionssystemplanung - Planungstisch, erhältlich am 23.07.2003 unter der Internetadresse:
   http://www.ipa.fhg.de
[4] erhältlich am 20.03.2003 im Internet unter der Adresse:
   http:/www.dualis.net

### Bezugszeichenliste

- 100: Maschinen-Anordnung
- 101: Flaschenaufrichter-Maschine
- 102: Flasche
- 103: Fließband
- 104: Abfüllmaschine
- 105: gefüllte Flasche
- 106: Fließband
- 107: Kappenausrichter-Maschine
- 108: Kappensortier-Maschine
- 109: Fließband
- 110: Kappe
- 111: mit Kappe versehene Flasche
- 112: Fließband
- 113: Flaschenverschließ-Maschine
- 114: verschlossene Flasche
- 115: Flaschenschuh-Aushebe-Maschine
- 116: Flaschenschuh
- 117: Fließband
- 118: Nebenstrom-Eingang Flaschenaufrichter-Maschine
- 119: Etikettier-Maschine
- 120: etikettierte Flasche
- 121: Codier-Maschine
- 122: erste Sticker-Maschine
- 123: zweite Sticker-Maschine
- 124: gekennzeichnete Flasche
- 125: Neben-Fließband
- 126: Folienschrumpfer-Maschine
- 127: Haupt-Fließband
- 128: dritte Sticker-Maschine
- 129: vierte Sticker-Maschine
- 130: fertig gekennzeichnete Flasche
- 131: Kartonverpackungs-Maschine
- 132: Sammelpackungs-Aufrichtermaschine
- 133: Karton
- 134: Karton mit darin eingebrachten Flaschen
- 135: Fließband
- 136: Kartonverschließ-Maschine
- 137: verschlossene Kartons
- 138: Fließband
- 139: Karton-Etiketten-Druckmaschine
- 140: bedruckte Kartons
- 141: Fließband
- 142: Kontrollwaage
- 143: gewogener Karton
- 144: Fließband
- 145: Palettiermaschine
- 146: erster Feldbus
- 147: Bänder-Steuerungseinheit
- 148: zweiter Feldbus
- 149: Prozessstabilisierungs-Steuerungsrechner
- 150: Messdaten-Datenbank-Verwaltungsrechner
- 151: Ethernet
- 152: Simulations-Rechner

- 200: System
- 201: 3D-Laserscanner
- 202: Laserscanner-Rechner
- 203: Maschinen-Datenbank
- 204: Integrations-Plattform-Rechner
- 205: 3D-Planungstisch

- 300: Blockdiagramm
- 301: Strukturdaten
- 302: Geometriedaten
- 303: Produktionsplandaten
- 304: Produktdaten und Packmitteldaten
- 305: Organisationsdaten
- 306: Ausfalldaten
- 307: Geschwindigkeitsdaten
- 308: Mengendaten
- 309: Zeitdaten
- 310: Ausfallparameterdaten
- 311: Geschwindigkeitsdaten
- 312: Mengendaten
- 313: Zeitdaten

## Patentansprüche

1. Verfahren zur computergestützten Simulation einer Maschinen-Anordnung, welche eine Vielzahl von Maschinen-Anordnungs-Komponenten aufweist,
• bei dem statische Gebäudedaten und/oder statische Anlagendaten eines Gebäudes und/oder von Maschinen-Anordnungs-Komponenten der Maschinen-Anordnung zu Beginn des Verfahrens erfasst werden, **dadurch gekennzeichnet daß** bei dem Prozessdaten, welche den Betrieb mindestens einer Maschinen-Anordnungs-Komponente der Maschinen-Anordnung beschreiben, zu Beginn des Verfahrens und/oder während des Verfahrens mittels an den Maschinen-Anordnungs-Komponenten angebrachter mobiler Sensoren gemessen werden, wobei jeder mobiler Sensor eindeutig mindestens einer Maschinen-Anordnungs-Komponenten zugeordnet ist,
• bei dem unter Verwendung der statischen Gebäudedaten, der statischen Anlagendaten, der Prozessdaten und unter Verwendung eines Simulationsmodells der Maschinen-Anordnungs-Komponenten als Eingangsgrößen die Maschinen-Anordnung in ihrem Verarbeitungsverhalten simuliert wird.

2. Verfahren gemäß Anspruch 1,
• bei dem die gemessenen Prozessdaten einer Zwischenverarbeitung, insbesondere einer Datenreduktion, unterzogen werden, und
• bei dem die zwischenverarbeiteten Prozessdaten im Rahmen der Simulation verwendet werden.

3. Verfahren gemäß Anspruch 1 oder 2,
bei dem im Rahmen der Simulation der Maschinen-Anordnung als Maschinen-Anordnungs-Komponenten zumindest ein Teil der folgenden Komponenten berücksichtigt wird:
• Maschinen der Maschinen-Anordnung;
• Fließbänder der Maschinen-Anordnung.

4. Verfahren gemäß einem der Ansprüche 1 bis 3,
bei dem Prozessdaten aller Maschinen-Anordnungs-Komponenten der Maschinen-Anordnung im Rahmen der Simulation der Maschinen-Anordnung berücksichtigt werden.

5. Verfahren gemäß einem der Ansprüche 1 bis 4,
bei dem zumindest ein Teil der statischen Gebäudedaten und/oder zumindest ein Teil der statischen Anlagendaten mittels eines Laserscanners erfasst werden.

6. Verfahren gemäß Anspruch 5,
bei dem zumindest ein Teil der statischen Gebäudedaten und/oder zumindest ein Teil der statischen Anlagendaten mittels eines 3D-Laserscanners erfasst werden.

7. Verfahren gemäß einem der Ansprüche 1 bis 6,
bei dem als statische Gebäudedaten zumindest ein Teil der folgenden Daten verwendet wird:
• Daten über die Struktur des Gebäudes;
• Geometriedaten über das Gebäude.

8. Verfahren gemäß einem der Ansprüche 1 bis 7,
bei dem als statische Anlagendaten zumindest ein Teil der folgenden Daten verwendet wird:
• Daten über die Struktur der Maschinen-Anordnung und/oder der Maschinen-Anordnungs-Komponenten;
• Geometriedaten über die Maschinen-Anordnung und/oder die Maschinen-Anordnungs-Komponenten;
• Produktionsplandaten;
• Daten über die von der Maschinen-Anordnung zu verarbeitenden Produkte, Zwischenprodukte und/oder Packmittel;
• Geschwindigkeitsdaten einer Maschinen-Anordnungs-Komponente;
• organisatorische Daten über den Betrieb der Maschinen-Anordnung und/oder der Maschinen-Anordnungs-Komponenten.

9. Verfahren gemäß einem der Ansprüche 1 bis 8,
bei dem als Prozessdaten zumindest ein Teil der folgenden Daten verwendet wird:
• Ausfalldaten über einen Ausfall einer Maschinen-Anordnungs-Komponente;
• Geschwindigkeitsdaten einer Maschinen-Anordnungs-Komponente;
• Daten, mit denen die Verarbeitungsmenge einer Maschinen-Anordnungs-Komponente pro Zeiteinheit angegeben wird;
• eine Zeitangabe, mit der der Zeitpunkt angeben wird, zu dem die Daten erfasst worden sind.

10. Verfahren gemäß einem der Ansprüche 1 bis 9,
bei dem Virtuelle-Realität-Planungsdaten im Rahmen der Simulation der Maschinen-Anordnung berücksichtigt werden.

11. Verfahren gemäß Anspruch 10,
bei dem die Virtuelle-Realität-Planungsdaten mittels einer computergestützten Virtuelle-Realität-Planungseinrichtung gebildet werden und als Eingangsgrößen der Simulation eingegeben werden.

12. Verfahren gemäß Anspruch 10 oder 11,
bei dem als die computergestützte Virtuelle-Realität-Planungseinrichtung ein Virtuelle-Realität-Planungstisch verwendet wird.

13. Verfahren gemäß Anspruch 12,
bei dem als Virtuelle-Realität-Planungstisch ein 3D-Virtuelle-Realität-Planungstisch verwendet wird.

14. Verfahren gemäß einem der Ansprüche 1 bis 13,
bei dem zumindest ein Teil der Maschinen als Verarbeitungsmaschinen eingerichtet sind.

15. Verfahren gemäß Anspruch 14,
bei dem zumindest ein Teil der Maschinen als Verpackungsmaschinen eingerichtet sind.

16. Verfahren gemäß Anspruch 14 oder 15,
bei dem zumindest ein Teil der Maschinen als eine der folgenden Maschinen eingerichtet sind:
• Flaschenaufrichter-Maschine,
• Materialabfüll-Maschine,
• Kappensortier-Maschine,
• Kappenausrichter-Maschine,
• Flaschenverschließ-Maschine,
• Flaschenschuh-Ausheber-Maschine,
• Flaschenetikettier-Maschine,
• Codier-Maschine,
• Sticker-Maschine,
• Folienschrumpfer-Maschine,
• Sammelpackungs-Aufrichter-Maschine,
• Schachtelverpackungs-Maschine,
• Schachtelverschließ-Maschine,
• Schachteletikettendruck-Maschine,
• Kontrollwaage,
• Palettiermaschine.

17. Maschinen-Simulations-Anordnung zur computergestützten Simulation einer Maschinen-Anordnung, **dadurch gekennzeichnet daß** eine Vielzahl von Maschinen-Anordnungs-Komponenten aufweist,
• mit einer Mehrzahl von mobilen Sensoren, welche an die Maschinen-Anordnungs-Komponenten anbringbar sind zum Erfassen von Prozessdaten, welche den Betrieb mindestens einer Maschinen-Anordnungs-Komponente der Maschinen-Anordnung beschreiben,
• mit einer Einrichtung zum Erfassen von statischen Gebäudedaten und/oder statischen Anlagendaten eines Gebäudes und/oder von Maschinen-Anordnungs-Komponenten der Maschinen-Anordnung,
• mit einem ersten Speicher zum Speichern der erfassten statischen Gebäudedaten und/oder der erfassten statischen Anlagendaten;
• mit einem zweiten Speicher zum Speichern der erfassten Prozessdaten,
• einen dritten Speicher zum Speichern von Simulationsmodellen der Maschinen-Anordnungs-Komponenten;
• einen vierten Speicher zum Speichern eines Simulationsprogramms,
• einer Datenverarbeitungseinrichtung, welche derart eingerichtet ist, dass unter Verwendung der statischen Gebäudedaten und/oder statischen Anlagendaten, der Prozessdaten, der Simulationsmodelle und des Simulationsprogramms die Maschinen-Anordnung in ihrem Verarbeitungsverhalten simuliert wird.

## Claims

1. Method for computer-assisted simulation of a machine arrangement which has a large number of machine arrangement components,
in which static building data and/or static plant data of a building and/or machine arrangement components of the machine arrangement are registered at the start of the method,
**characterized in that** process data which describe the operation of at least one machine arrangement component of the machine arrangement are measured at the start of the method and/or during the method by means of mobile sensors fitted to the machine arrangement components, each mobile sensor being assigned uniquely to at least one machine arrangement component,
in which, by using the static building data, the static plant data, the process data and a simulation model of the machine arrangement components as input variables, the processing behaviour of the machine arrangement is simulated.

2. Method according to Claim 1,
in which the measured process data are subjected to intermediate processing, in particular data reduction, and
in which the intermediately processed process data are used within the context of the simulation.

3. Method according to Claim 1 or 2,
in which, within the context of the simulation of the machine arrangement, at least some of the following components are used as machine arrangement components:
machines in the machine arrangement;
assembly lines in the machine arrangement.

4. Method according to one of Claims 1 to 3,
in which process data from all the machine arrangement components of the machine arrangement are taken into account within the context of the simulation of the machine arrangement.

5. Method according to one of Claims 1 to 4,
in which at least some of the static building data and or at least some of the static plant data are registered by means of a laser scanner.

6. Method according to Claim 5,
in which at least some of the static building data and/or at least some of the static plant data are registered by means of a 3-D laser scanner.

7. Method according to one of Claims 1 to 6,
in which at least some of the following data are used as static building data:
• data about the structure of the building;
• geometric data about the building.

8. Method according to one of Claims 1 to 7,
in which at least some of the following data are used as static plant data:
• data about the structure of the machine arrangement and/or the machine arrangement components;
• geometric data about the machine arrangement and/or the machine arrangement components; production plan data;
• data about the products, intermediate products and/or packaging means to be processed by the machine arrangement;
• speed data from a machine arrangement component;
• organizational data about the operation of the machine arrangement and/or the machine arrangement components.

9. Method according to one of Claims 1 to 8,
in which at least some of the following data are used as process data:
• failure data about the failure of a machine arrangement component;
• speed data from a machine arrangement component;
• data with which the processing rate of a machine arrangement component per unit time are specified;
• time information, with which the time at which the data were registered is specified.

10. Method according to one of Claims 1 to 9,
in which virtual reality planning data are taken into account within the context of the simulation of the machine arrangement.

11. Method according to Claim 10,
in which the virtual reality planning data are formed by means of a computer-assisted virtual reality planning device and are put into the simulation as input variables.

12. Method according to Claim 10 or 11,
in which a virtual reality planning table is used as the computer-assisted virtual reality planning device.

13. Method according to Claim 12, in which a 3-D virtual reality planning table is used as the virtual reality planning table.

14. Method according to one of Claims 1 to 13,
in which at least some of the machines are set up as processing machines.

15. Method according to Claim 14
in which at least some of the machines are set up as packaging machines.

16. Method according to Claim 14 or 15,
in which at least some of the machines are set up as one of the following machines:
• bottle righting machine,
• material filling machine,
• cap sorting machine,
• cap righting machine,
• bottle closing machine
• bottle shoe ejecting machine,
• bottle labelling machine,
• encoding machine,
• sticker machine,
• film shrink-wrapping machine,
• multiple-pack righting machine,
• carton packing machine,
• carton closing machine,
• carton label printing machine,
• control scales,
• palleting machine.

17. Machine simulation arrangement for computer-assisted simulation of a machine arrangement,
**characterized in that** it has a large number of machine arrangement components,
• having a plurality of mobile sensors, which can be fitted to the machine arrangement components in order to register process data which describe the operation of at least one machine arrangement component of the machine arrangement,
• having a device for registering static building data and/or static plant data of a building and/or machine arrangement components of the machine arrangement,
• having a first store for storing the static building data registered and/or the static plant data registered;
• having a second store for storing the process data registered,
• a third store for storing simulation models of the machine arrangement components;
• a fourth store for storing a simulation program,
• a data-processing device which is set up in such a way that, by using the static building data and/or static plant data, the process data, the simulation models and the simulation program, the processing behaviour of the machine arrangement is simulated.

## Revendications

1. Procédé pour la simulation assistée par ordinateur d'un ensemble de machines, qui présente une pluralité de composants d'agencement de machines,
- dans lequel des données de bâtiment statiques et/ou des données d'installation statiques d'un bâtiment et/ou de composants d'agencement de machines de l'agencement de machines sont enregistrées au début du procédé, **caractérisé en ce que** des données de processus, qui décrivent l'exploitation d'au moins un composant d'agencement de machines de l'agencement de machines, sont mesurées au début du procédé et/ou pendant le procédé au moyen de capteurs mobiles placés sur les composants d'agencement de machines, chaque capteur mobile étant attribué clairement à au moins un composant d'agencement de machines,
- dans lequel, en utilisant des données de bâtiment statiques, des données d'installation statiques et des données de processus et en utilisant un modèle de simulation des composants d'agencement de machines comme grandeurs d'entrée, l'agencement de machines est simulé dans son comportement au traitement.

2. Procédé selon la revendication 1,
- dans lequel les données de processus mesurées sont soumises à un traitement intermédiaire, en particulier une réduction de données, et
- dans lequel les données de processus traitées de façon intermédiaire sont utilisées dans le cadre de la simulation.

3. Procédé selon la revendication 1 ou 2,
dans lequel, dans le cadre de la simulation de l'agencement de machines comme composants d'agencement de machines, au moins une partie des composants suivants est prise en compte :
- machines de l'agencement de machines ;
- chaînes de montage de l'agencement de machines.

4. Procédé selon l'une quelconque des revendications 1 à 3,
dans lequel les données de processus de tous les composants d'agencement de machines de l'agencement de machines sont prises en compte dans le cadre de la simulation de l'agencement de machines.

5. Procédé selon l'une quelconque des revendications 1 à 4,
dans lequel au moins une partie des données de bâtiment statiques et/ou au moins une partie de données d'installation statiques sont enregistrées au moyen d'un scanner laser.

6. Procédé selon la revendication 5,
dans lequel au moins une partie des données de bâtiment statiques et/ou au moins une partie des données d'installation statiques sont enregistrées au moyen d'un scanner laser en 3D.

7. Procédé selon l'une quelconque des revendications 1 à 6,
dans lequel on utilise comme données de bâtiment statiques au moins une partie des données suivantes :
- données sur la structure du bâtiment ;
- données de géométrie sur le bâtiment.

8. Procédé selon l'une quelconque des revendications 1 à 7,
dans lequel on utilise comme données d'installation statiques au moins une partie des données suivantes :
- données sur la structure de l'agencement de machines et/ou des composants de l'agencement de machines ;
- données de géométrie sur l'agencement de machines et/ou les composants de l'agencement de machines ;
- données de programme de production ;
- données sur les produits, produits intermédiaires et/ou moyens d'emballage à traiter par l'agencement de machine ;
- données de vitesse d'un composant d'agencement de machines ;
- données d'organisation sur l'exploitation de l'agencement de machines et/ou des composants de l'agencement de machines.

9. Procédé selon l'une quelconque des revendications 1 à 8, dans lequel on utilise comme données de processus au moins une partie des données suivantes :
- données de défaillance sur une défaillance d'un composant d'agencement de machines ;
- données de vitesse d'un composant d'agencement de machines ;
- données avec lesquelles on indique la quantité de traitement d'un composant d'agencement de machines par unité de temps,
- une indication de temps avec laquelle on indique le moment où les données ont été enregistrées.

10. Procédé selon l'une quelconque des revendications 1 à 9,
dans lequel les données de planification de réalité virtuelle sont prises en compte dans le cadre de la simulation de l'agencement de machines.

11. Procédé selon la revendication 10,
dans lequel les données de planification de réalité virtuelle sont formées au moyen d'un dispositif de planification de réalité virtuelle assisté par ordinateur et sont entrées comme grandeurs d'entrée de la simulation.

12. Procédé selon la revendication 10 ou 11,
dans lequel une table de planification de réalité virtuelle est utilisée comme étant le dispositif de planification de réalité virtuelle assisté par ordinateur.

13. Procédé selon la revendication 12,
dans lequel on utilise une table de planification de réalité virtuelle en 3D comme table de planification de réalité virtuelle.

14. Procédé selon l'une quelconque des revendications 1 à 13,
dans lequel au moins une partie des machines est aménagée sous forme de machines de traitement.

15. Procédé selon la revendication 14,
dans lequel au moins une partie des machine est aménagée sous forme de machines d'emballage.

16. Procédé selon la revendication 14 ou 15, dans lequel au moins une partie des machines est aménagée comme étant une des machines suivantes :
- machine de redressement de bouteille,
- machine de remplissage de matériau,
- machine de tri / bouchon,
- machine d'alignement / bouchon,
- machine de fermeture de bouteille,
- machine de soulèvement de sabot de bouteille,
- machine d'étiquetage de bouteilles,
- machine de codage,
- machine d'autocollage,
- machine de rétractation de film,
- machine de redressement d'emballage collectif,
- machine d'emballage en boîte,
- machine de fermeture de boîte,
- machine d'impression d'étiquette de boîte,
- balance de contrôle,
- machine de palettisation.

17. Agencement de simulation de machines pour la simulation assistée par ordinateur d'un agencement de machines, **caractérisé par** une pluralité de composants d'agencement de machines, comprenant
- une pluralité de capteurs mobiles, qui peuvent être placés sur les composants d'agencement de machines pour l'enregistrement de données de processus, lesquelles décrivent le fonctionnement d'au moins un composant d'agencement de machines de l'agencement de machines,
- un dispositif pour l'enregistrement de données de bâtiment statiques et/ou de données d'installation statiques d'un bâtiment et/ou de composants d'agencement de machines de l'agencement de machines ;
- une première mémoire pour le stockage des données de bâtiment statiques enregistrées et/ou des données d'installation statiques enregistrées ;
- une deuxième mémoire pour l'enregistrement des données de processus enregistrées ;
- une troisième mémoire pour l'enregistrement de modèles de simulation des composants d'agencement de machines ;
- une quatrième mémoire pour le stockage d'un programme de simulation ;
- un dispositif de traitement de données qui est aménagé de telle sorte que l'agencement de machines est simulé dans son comportement au traitement en utilisant des données de bâtiment statiques et/ou des données d'installation statiques, des données de processus, des modèles de simulation et du programme de simulation.
